# EUROPEAN PATENT SPECIFICATION

(11) **EP 2 853 840 B1**
(45) Date of publication and mention of the grant of the patent: **02.11.2016**
(21) Application number: 14186285.4
(22) Date of filing: 24.09.2014
(51) Int. Cl.: F24H 8/00

(54) **Condensate removal unit in a boiler**
Kondensatabführungseinheit in einem Kessel
Unité d'élimination de condensat dans une chaudière

(30) Priority: 24.09.2013 IT MI20131573
(43) Date of publication of application: 01.04.2015
(73) Proprietor: Riello S.p.A., Legnago (IT)
(72) Inventor: Ciofolo, Noé, 23816 Barzio (IT); Casiraghi, Stefano, 23875 Osnago (IT)
(74) Representative: Eccetto, Mauro

(56) References cited:
- EP-A2- 1 734 316
- EP-A2- 1 762 791
- DE-A1- 19 757 069
- DE-C1- 3 325 200
- GB-A- 2 481 319

## Description

The present invention relates to a condensate removal unit for a boiler.

In particular, the present invention is advantageously but non-exclusively applied in condensing boilers, to which the following description will explicitly refer without losing in generality.

As is known, a siphon device is used on the condensate discharge lines of current boilers (in particular, the current condensing boilers) which is intended to prevent the exit of fumes from the condensate outlet.

For instance EP-A2-1 762 791 (Vaillant) describes a condensate removal unit for a boiler. The removal unit comprises:
(a) a siphon to prevent the release of fumes from the condensate outlet;
(b) condensate collecting means;
(c) pumping means for discharging the condensate; and
(d) control means of the pumping means according to the condensate level in the condensate collecting means;
said siphon, said condensate collecting means and said pumping means are integrated in a single compact apparatus;
wherein said siphon comprises a main hollow body comprising a first branch, to which a condensate inlet pipe is linked, and a second branch, hydraulically linked to a condensate outlet pipe.

Moreover, in some solutions (for example in DE-C1-33 25 200 (Bommer)) the inlet branch of the siphon device is provided with a floater which is intended to prevent the passage of fumes to the environment even in the absence of condensation water inside the siphon itself.

Normally, the condensate is not present in the siphon at the first power-up or after a prolonged non-use of the boiler.

Moreover, in some applications, it is not possible to discharge the condensate below the boiler, but the water discharge line can be found on the surface above the one on which the boiler is installed. A pump must therefore be installed in order to pump the condensate to a height of 3÷5 m for conveying it into the wastewater discharge system.

The pump, immersed in a well, is operated by a special floater when the condensate level reaches a certain level within the well itself.

It is also known that it is always necessary to ensure a minimum level of condensate within the well in which the pump is located so that the return motor never runs dry.

However, the condensate removal units currently on the market are very bulky since, in addition to a siphon device, they also include an auxiliary tank for collecting the condensate, in series with respect to the siphon. The discharge pump with the relative actuation floater is immersed in this auxiliary tank. Therefore, the current solutions require the presence of two floaters; i.e., a first floater for the siphon device and a second floater for the actuation device of the submersed pump.

Thus, the main object of the present invention is to provide a condensate removal unit for a boiler which is compact and which consists of the minimum number of components with the purpose of reducing the production costs as much as possible.

Therefore, according to the present invention, a condensate removal unit for a boiler is provided as claimed in the independent claim 1, or in any of the claims depending, either directly or indirectly, on claim 1.

A preferred embodiment will now be described for a better understanding of the present invention by way of a non-limiting example only, with reference to the accompanying drawings, in which:
- figure 1 schematically shows a boiler comprising a condensate removal unit according to the present invention;
- figure 2 shows a longitudinal section of the condensate removal unit according to the present invention;
- figure 3 shows a first configuration of the condensate removal unit shown in figure 2;
- figure 4 shows a second configuration of the condensate removal unit shown in figure 2;
- figure 5 shows a third configuration of the condensate removal unit shown in figure 2;
- figure 6 shows a fourth configuration of the condensate removal unit shown in figure 2; and
- figure 7 shows a fifth configuration of the condensate removal unit shown in figure 2.

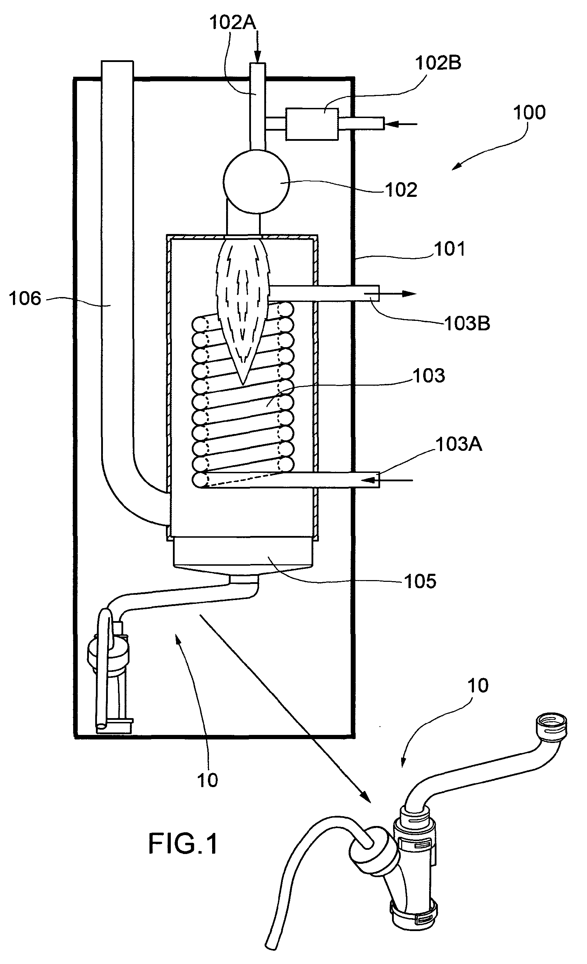

In figure 1, reference numeral 100 indicates, as non-exhaustive example, a condensing boiler comprising a condensate removal unit 10 according to the teachings of the present invention.

As is known, in a condensing boiler, most of the latent heat of the fumes expelled by the chimney can be recovered.

In fact in these boilers, the particular condensation technology allows cooling the fumes until they return to the state of saturated liquid (or in some cases, wet steam), with a relative considerable heat recovery. In this way, the temperature of the outlet fumes (which lowers to about 40 °C) is near the water delivery temperature, thus much lower than 140 °C ÷ 160 °C of high efficiency boilers, and 200 °C ÷ 250 °C of traditional boilers.

It is possible to work with such fume temperatures, and therefore condense, since condensing boilers use heat exchangers made with metals resistant to the acidity of the condensate. Fumes discharged at low temperature, however, do not allow the natural draft of the chimney and are expelled thanks to a fan placed upstream of the burner. Therefore, there is a pressurized fume line which must be sealed.

Incidentally, however, all the following observations are applicable not only to condensing boilers, to which explicit reference is made, but also to any type of boiler in which the phenomenon of condensation of at least a part of the discharge fumes takes place.

The condensing boiler 100 in figure 1 comprises, in a traditional manner, an outer casing 101 containing inside a premix burner 102, a heat exchanger 103 overlying a collecting well of condensate 105, and a fume outlet pipe 106 provided with a fan (not shown).

More in detail, we can say that the premix burner 102 is connected to a combustion air supply conduit 102A and a fuel gas supply conduit 102B.

The heat exchanger 103 is in turn hydraulically connected to a return conduit 103A from the heating system (not shown), and to a delivery conduit 103B to the heating system itself.

Said condensate removal unit 10 is hydraulically connected to the condensate collecting well 105.

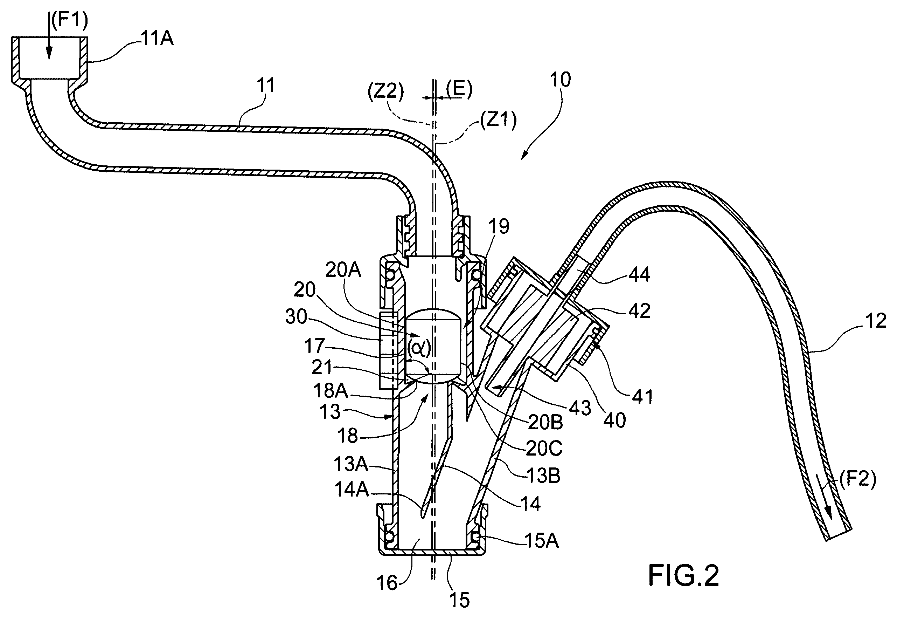

As shown in greater detail in figure 2, unit 10 comprises a condensate inlet pipe 11 and a condensate outlet pipe 12. Such an outlet pipe 12 may possibly be hydraulically connected to a water discharge line (not shown).

The inlet pipe is provided with a fitting 11A which allows the attachment thereof to the bottom of the condensate collecting well 105.

Unit 10 further comprises a hollow main body 13 which comprises a first branch 13A, which is connected to the inlet pipe 11 by means of respective first quick couplings, and a second branch 13B hydraulically connected to the outlet pipe 12 by means of respective second quick couplings.

The two branches 13A and 13B are mutually separated by a separation baffle 14. The set of the two arms 13A and 13B substantially forms the body of a siphon. Therefore, the inlet pipe 11, the siphon body (formed by the two branches 13A and 13B) and the outlet pipe 12 are substantially shaped as a typical siphon.

An opening 16 is formed between the lower edge 14A of the separation baffle 14 and a removable bottom 15 which, in use, is traversed by the condensate (see hereafter).

The high part of branch 13A houses a seat 17 of a floater 20 which, by gravity, rests on an edge 18A of an opening 18.

Moreover, it should be noted that floater 20 is narrower than seat 17, but is wider than opening 18.

In other words, if seat 17 has a vertical symmetry axis (Z1), floater 20 has a vertical symmetry axis (Z2) the maximum displacement from axis (Z1) of which is given by an eccentricity (E).

Therefore, a chamber 19 closed at the bottom by edge 18A of opening 18 is formed between the inner surface of seat 17 and the outer surface of floater 20. Floater 20, because of its weight, will close opening 18 resting on edge 18A.

Since seat 17 and floater 20 are both cylindrical, they will touch each other, possibly along a generating line 20A of floater 20 itself. Moreover, edge 18A is inclined by an angle (α) with respect to the vertical wall of seat 17. Therefore, said chamber 19 continues also below floater 20.

Note that the shape of chamber 19 may vary over time and not always floater 20 is tangent to seat 17 along said generating line 20A.

In summary, chamber 19 is enclosed between the inner cylindrical surface of seat 17, the outer cylindrical lateral surface 20B of floater 20 (with the possible exception of the contact generating line between floater 20 and the respective seat 17), edge 18A and a portion 20C of the bottom of floater 20 itself.

Thanks to the inclination of edge 18A by angle (α) with respect to the vertical wall of seat 17, a sort of bag 21, always belonging to chamber 19, forms below floater 20 which, as will be better seen when the operation of the removal unit 10 is explained, progressively fills with condensate (see hereafter).

A sensor 30, attached to the outer wall of branch 13A, detects, instant by instant, the height position of floater 20 for reasons that will be clarified in more detail hereafter.

The high part of the second branch 13B widens to form volute 40 of a pump 41.

In addition to volute 40, pump 41 comprises the elements which are schematically shown in figure 2, namely a rotor 42, a condensate suction port 43 and a delivery port 44 of the condensate itself; the latter being hydraulically connected to the outlet pipe 12.

Take note also that the main body 13 advantageously, but not necessarily, may be made in one piece, for example in a plastic material, simply closed inferiorly by the removable bottom 15 which may be shaped as a simple cap fitted on the main body 13 and having a sealing O-ring 15A.

The presence of the removable bottom 15 allows the opening the main body 13 to perform periodic inspections and any cleaning of the main body 13 itself.

The main body 13 may be obtained advantageously, but not necessarily, by a process of injection molding of a plastic material.

The main body 13, therefore, comprises a first portion (volute 40) intended to accommodate rotor 42 of the condensate discharge pump 40, and a second portion (seat 17) which contains floater 20 therein.

As said above, the inlet pipe 11 and the outlet pipe 12 are connected to the main body by means of respective quick couplings visible in figure 2 but which will not be described in greater detail because of known type.

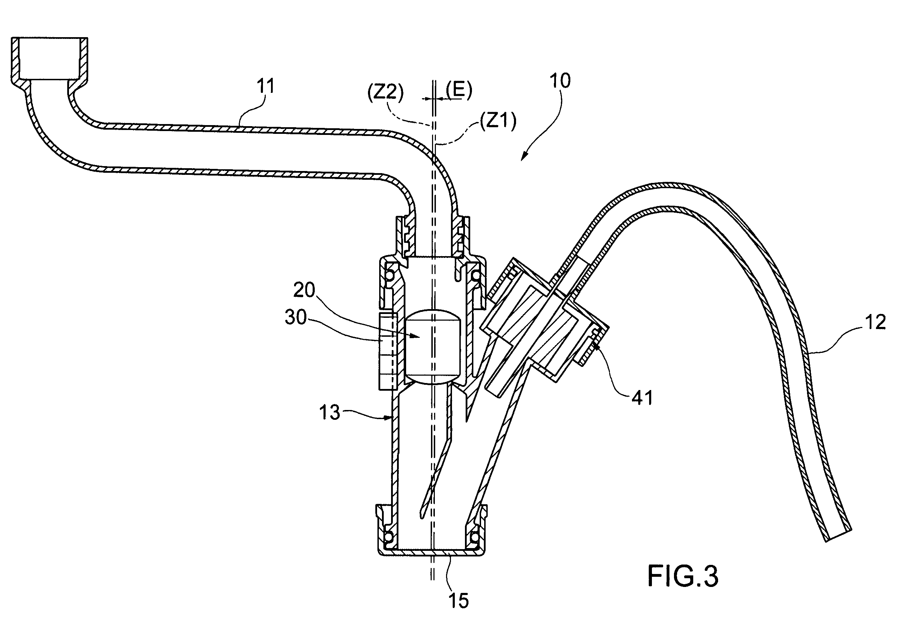

The operation of the condensate removal unit 10 according to the invention will now be described with reference to the accompanying figures 3-7 which show five different configurations that the unit can take.

Figure 3 shows the condensate removal unit 10 in its initial configuration, that is, when there has not yet been a considerable formation of condensate in the boiler. It is noted that in this case, floater 20 closes opening 18 as a cap, preventing the escape of the combustion fumes, for example through the outlet pipe 12.

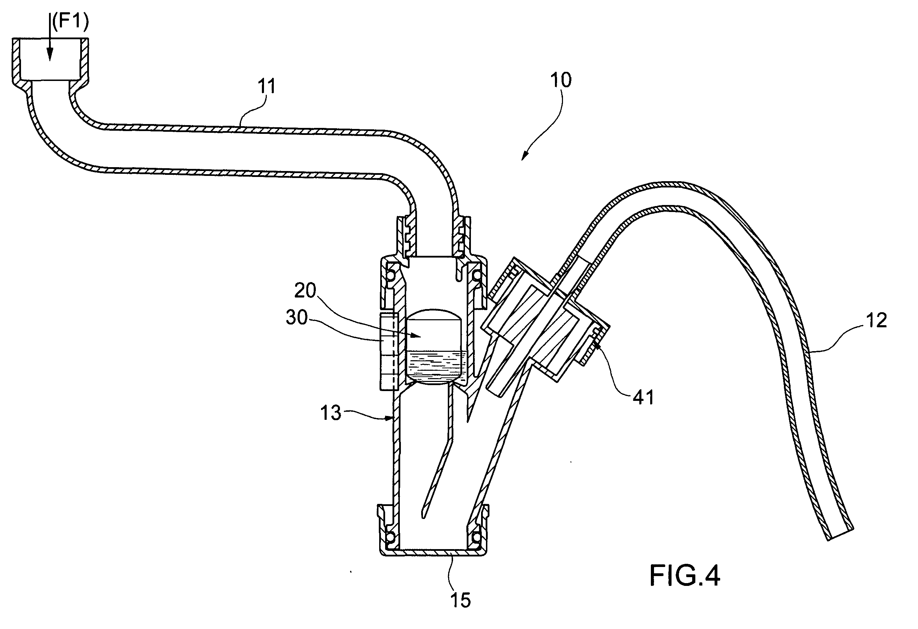

As shown in figure 4, at some point, the condensate begins to reach seat 17 falling by gravity from well 105 (figure 1) through the inlet pipe 11 (arrow (F1)). Seat 17 then begins to fill with the condensate which occupies chamber 19, the geometry of which has been defined above. The buoyancy exerted by the condensate in chamber 19 on floater 20 is not yet able to lift floater 20 itself.

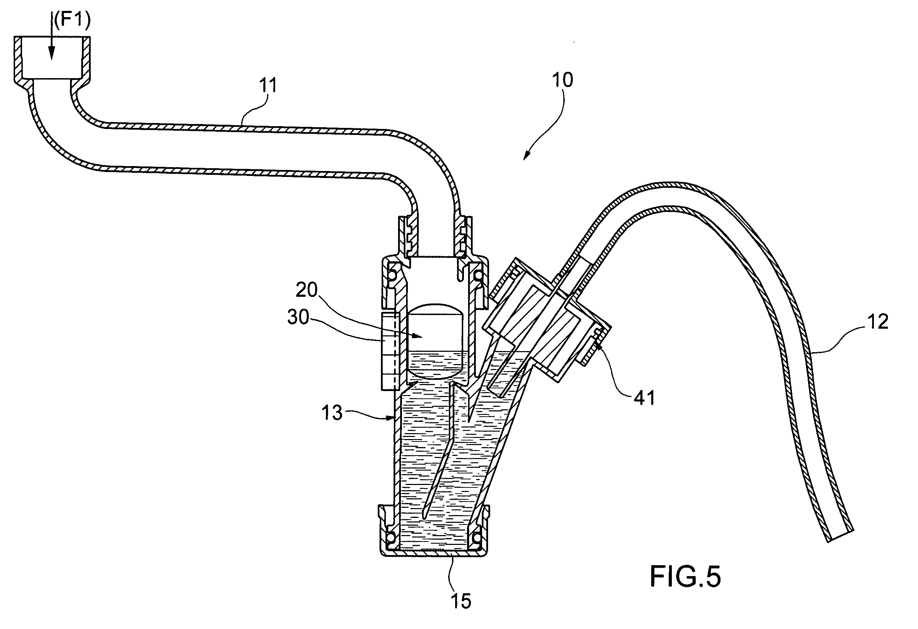

On the other hand, figure 5 shows the condition in which the condensate, continuing to arrive, progressively wets a surface always larger than the surface of floater 20 until the latter rises due to the buoyancy of the condensate, uncovering opening 18 through which the condensate itself can now outflow so as to fill the lower part of the main body 13. For the principle of communicating vessels, the level of the free surface of condensate is equal in the two branches 13A and 13B. In this configuration, the condensate itself prevents the escape of the combustion fumes, for example from the outlet pipe 12.

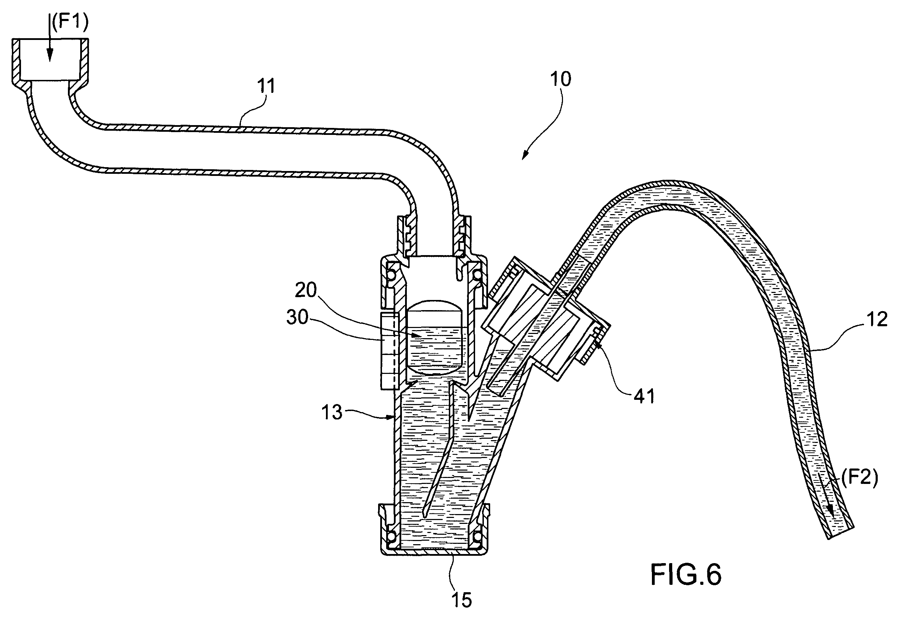

In the configuration shown in figure 6, the condensate level rises further. Floater 20 then continues to rise until it reaches such a height to start pump 41 for emptying the pump body 13 through the outlet pipe 12 (arrow (F2)).

As said above, the height of floater 20 with respect to bottom 15 is detected instant by instant by sensor 30 which sends a signal to an electronic control unit (not shown), which generates a command to drive pump 41 as soon as a certain value of the floater height with respect to bottom 15 is exceeded.

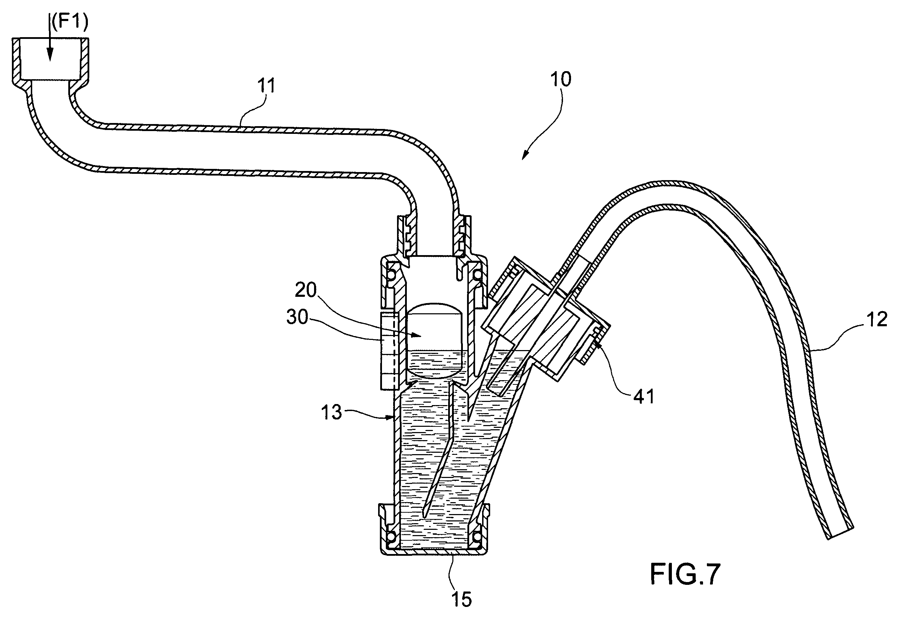

When the condensate level falls (figure 7) because, for example, the boiler has been switched off, floater 20 lowers again and sensor 30 generates a signal adapted to stop pump 41. Basically, the system has returned to the configuration shown in figure 5.

By observing figure 7 it can be seen that the relative positions of floater 20 and pump 41 are so that pump 41 is never operated when dry. In other words, pump 41 must be operated only when its section port 43 properly draws in the condensate that has deposited in the main body 13. This is only achieved when the suction port 43 is constructively always below the bottom of floater 20.

The main advantage of the present condensate removal unit consists in the extreme compactness and cost-effectiveness of the solution due to the integration of two different functions in a single floater which is used, therefore, both as a safety element against the passage of fumes, and as device for operating the emptying pump motor.

## Claims

1. Condensate removal unit (10) for a boiler (100); the condensate removal unit (10) comprising:
(f1) a siphon (13) to prevent the release of fumes from the condensate outlet, the siphon (13) comprising a floater (20);
(f2) condensate collecting means;
(f3) pumping means (40, 41) for discharging the condensate; and
(f4) control means (30) configured for activating said pumping means (41) according to the condensate level in said collecting means (41);
**wherein** said siphon (13), said condensate collecting means and said pumping means (40, 41) are integrated in a single compact apparatus;
**wherein** the floater (20) of the siphon (13) works both as a safety element against the passage of fumes and as an operating device of said pumping means (40, 41);
**wherein** said siphon (13) comprises a main hollow body (13) comprising a first branch (13A), to which a condensate inlet pipe (11) is linked, and a second branch (13B), hydraulically linked to a condensate outlet pipe (12);
said condensate removal unit (10) being **characterized in that** said first branch (13A) houses a seat (17) of the floater (20) which rests by gravity on an edge (18A) of an opening (18), and **in that** said second branch (13B) widens to form the volute (40) of the pumping means (41).

2. Condensate Removal unit (10), according to Claim 1, **characterized in that** said main hollow body (13) is made in one piece.

3. Condensate Removal unit (10), according to Claim 2, **characterized in that** said main hollow body (13) is made by means of an injection moulding process of a plastic material.

4. Condensate Removal unit (10), according to Claim 2 or Claim 3, **characterized in that** said main hollow body (13) is closed by means of a removable bottom (15).

5. Condensate Removal unit (10), according to anyone of preceding Claims, **characterized in that** the suction port (43) of said pumping means (40, 41) is arranged below the bottom of said floater (20).

6. Boiler (100) **characterized in that** it comprises at least a condensate removal unit (10) according to anyone of Claims 1-5.

7. Boiler (100), according to Claim 6, **characterized in that** it is a condensing boiler (100).

## Patentansprüche

1. Kondensatabführungseinheit (10) für einen Kessel (100); wobei die Kondensatabführungseinheit aufweist:
(f1) einen Siphon (13) zur Vermeidung des Austritts von Abgasen von dem Kondensatauslass, wobei der Siphon (13) einen Schwimmer (20) aufweist;
(f2) Kondensatsammelmittel;
(f3) Pumpmittel (40, 41) zum Abführen des Kondensats;
(f4) Steuermittel (30), die zur Aktivierung der Pumpmittel (41) entsprechend dem Kondensatniveau in den Sammelmitteln (41) konfiguriert sind;
wobei der Siphon (13), die Kondensatsammelmittel und die Pumpmittel (40, 41) in einem einzigen kompakten Apparat integriert sind;
wobei der Schwimmer (20) des Siphons (13) sowohl als ein Sicherheitselement gegen den Durchtritt von Abgasen als auch als ein Betriebsgerät der Pumpmittel (40, 41) arbeitet;
wobei der Siphon (13) einen hohlen Hauptkörper (13) mit einer ersten Abzweigung (13A), mit der eine Kondensateinlassleitung (11) verbunden ist, und mit einer zweiten Abzweigung (13B), die hydraulisch mit einer Kondensatauslassleitung (12) verbunden ist, aufweist;
wobei die Kondensatbabführungseinheit (10) **dadurch gekennzeichnet ist, dass** die erste Abzweigung (13A) einen Sitz (17) des Schwimmers (20) aufnimmt, der durch die Schwerkraft auf einem Rand (18A) einer Öffnung (18) sitzt, und dadurch, dass die zweite Abzweigung (13B) sich zur Bildung des Spiralgehäuses (40) der Pumpmittel (40) verbreitert.

2. Kondensatabführungseinheit (10) nach Anspruch 1, **dadurch gekennzeichnet, dass** der hohle Hauptkörper (13) aus einem Stück besteht.

3. Kondensatabführungseinheit (10) nach Anspruch 2, **dadurch gekennzeichnet, dass** der hohle Hauptkörper (13) mittels eines Spritzgießprozesses eines Kunststoffmaterials hergestellt ist.

4. Kondensatabführungseinheit (10) nach Anspruch 2 oder 3, **dadurch gekennzeichnet, dass** der hohle Hauptkörper (13) mittels eines abnehmbaren Bodens (15) verschlossen ist.

5. Kondensatabführungseinheit (10) nach einem der vorhergehenden Ansprüche, **dadurch gekennzeichnet, dass** der Sauganschluss (43) der Pumpmittel (40, 41) unterhalb des Bodens des Schwimmers (20) angeordnet ist.

6. Kessel (100), **dadurch gekennzeichnet, dass** dieser wenigstens eine Kondensatabführungseinheit (10) nach einem der Ansprüche 1-5 aufweist.

7. Kessel (100) nach Anspruch 6, **dadurch gekennzeichnet, dass** dieser ein Brennwertkessel (100) ist.

## Revendications

1. Unité d'élimination de condensat (10) pour une chaudière (100) ; l'unité d'élimination de condensat (10) comprenant :
(f1) un siphon (13) pour empêcher la libération de fumées de la sortie de condensat, le siphon (13) comprenant un flotteur (20) ;
(f2) des moyens de collecte de condensat ;
(f3) des moyens de pompage (40, 41) pour évacuer le condensat ; et
(f4) des moyens de contrôle (30) configurés pour activer lesdits moyens de pompage (41) selon le niveau de condensat dans lesdits moyens de collecte (41) ;
dans laquelle ledit siphon (13), lesdits moyens de collecte de condensat et lesdits moyens de pompage (40, 41) sont intégrés dans un seul appareil compact ;
dans laquelle le flotteur (20) du siphon (13) travaille à la fois comme un élément de sécurité contre le passage de fumées et comme un dispositif opérationnel desdits moyens de pompage (40, 41) ;
dans laquelle ledit siphon (13) comprend un corps creux principal (13) comprenant une première branche (13A), à laquelle un tuyau d'entrée de condensat (11) est relié, et une seconde branche (13B) reliée hydrauliquement à un tuyau de sortie de condensat (12) ;
ladite unité d'élimination de condensat (10) étant **caractérisée en ce que** ladite première branche (13A) loge un siège (17) du flotteur (20) qui repose par gravité sur une arête (18A) d'une ouverture (18) et **en ce que** ladite seconde branche (13B) s'élargit pour former la volute (40) des moyens de pompage (41).

2. Unité d'élimination de condensat (10) selon la revendication 1, **caractérisée en ce que** ledit corps creux principal (13) est réalisé en une seule pièce.

3. Unité d'élimination de condensat (10) selon la revendication 2, **caractérisée en ce que** ledit corps creux principal (13) est réalisé à l'aide d'un procédé de moulage par injection d'un matériau plastique.

4. Unité d'élimination de condensat (10) selon la revendication 2 ou 3, **caractérisée en ce que** ledit corps creux principal (13) est fermé à l'aide d'un fond amovible (15).

5. Unité d'élimination de condensat (10) selon l'une quelconque des revendications précédentes, **caractérisée en ce que** l'orifice d'aspiration (43) desdits moyens de pompage (40, 41) est agencé sous le fond dudit flotteur (20).

6. Chaudière (100), **caractérisée en ce qu'**elle comprend au moins une unité d'élimination de condensat (10) selon l'une quelconque des revendications 1 à 5.

7. Chaudière (100) selon la revendication 6, **caractérisée en ce qu'**elle est une chaudière à condensation (100).
